# FASCICULE DE BREVET EUROPEEN

(11) **EP 1 910 140 B1**
(45) Date de publication et mention de la délivrance du brevet: **04.04.2018**
(21) Numéro de dépôt: 06764187.8
(22) Date de dépôt: 17.07.2006
(51) Int. Cl.: B60S 1/08

(54) **DETECTEUR DE PLUIE CAPACITIF**
KAPAZITIVER REGENSENSOR
CAPACITIVE RAIN SENSOR

(30) Priorité: 19.07.2005 EP 05076707
(43) Date de publication de la demande: 16.04.2008
(73) Titulaire: Valeo Schalter und Sensoren GmbH, 74321 Bietigheim-Bissingen (DE); AGC Glass Europe, 1348 Louvain-la-Neuve (BE)
(72) Inventeur: DELATTE, Yves, 6040 Jumet (BE); SCHULER, Thomas, 75446 Wiensheim (DE)
(74) Mandataire: Le Vaguerèse, Sylvain Jacques
(86) Numéro de dépôt international: PCT/EP2006/064329
(87) Numéro de publication internationale: WO 2007/009974

(56) Documents cités:
- US-A- 3 826 979
- US-A- 6 094 981
- US-A1- 2004 108 861
- US-A1- 2005 115 308
- US-B1- 6 422 062

## Description

La présente invention concerne les détecteurs de pluie, et notamment ceux utilisés sur les véhicules automobiles.

L'utilisation de capteurs pour détecter la présence d'eau sur un vitrage, par exemple pour commander une opération telle que la mise en marche d'essuie-glace pour les véhicules automobiles est usuelle. Dans cette application les capteurs commercialisés sont du type utilisant l'altération d'un signal lumineux sur le trajet duquel se situent les gouttes d'eau à détecter. Le capteur comprend un émetteur et un récepteur du signal lumineux constitué par exemple d'un rayon réfléchi.

Les détecteurs fonctionnant sur ces signaux optiques, lorsqu'ils sont utilisés notamment sur des vitrages automobiles, ont l'inconvénient de conduire à la présence sur le vitrage d'éléments non-transparents. Même miniaturisés, le détecteur recouvre une dizaine de centimètres carrés. Pour minimiser la gêne sur les pare-brise, le détecteur est habituellement dissimulé derrière le rétroviseur intérieur. Même dans cette disposition, sa présence sur le pare-brise reste inesthétique, au moins vu de l'extérieur.

Un autre type de détecteur a été proposé antérieurement, qui met en oeuvre un dispositif dans lequel le signal est généré par une variation de capacité. Un ensemble d'électrodes est disposé sur le vitrage. La présence d'eau sur le vitrage, eau qui présente une constante diélectrique très différente de celle de l'air ou du verre, modifie de façon significative la capacité du système d'électrodes. Cette variation constitue le signal généré.

La réalisation des détecteurs capacitifs soulève cependant des difficultés pratiques certaines. Parmi les plus délicates à résoudre, la question de la sensibilité à des phénomènes parasites est constante. Il découle du principe même de la détection. Etant basée sur des variations de capacité d'électrodes disposées sur le pare-brise, tout élément conducteur associé au détecteur, et qui n'est pas isolé au moyen d'une gaine faisant écran électromagnétique, est susceptible d'engendrer des parasites.

Un avantage significatif des détecteurs capacitifs réside dans la possibilité de former les électrodes constitutives de ce détecteur dans un matériau essentiellement transparent au rayonnement visible. Par essentiellement transparent il faut entendre que le capteur laisse une transmission visible d'au moins 50%, et de préférence d'au moins 60%. Cette transmission dans les cas les plus avantageux dépasse 70%. Bien évidemment plus la transmission est élevée plus le détecteur apparaît de façon discrète à l'observation du vitrage. Le choix de matériaux de ce type permet de disposer le détecteur sur des zones du vitrage dans lesquelles esthétiquement et fonctionnellement il est préférable de ne pas avoir d'éléments opaques. Non seulement les électrodes mais également les conducteurs alimentant celles-ci, sont avantageusement transparents. Cette transparence s'accommode mal de l'idée d'une gaine.

La présence de conducteurs non isolés sur le vitrage dans les zones où la détection est active, se traduit par la présence de capacités secondaires qui génèrent un bruit de fond plus ou moins important.

Pour minimiser l'effet relatif de ce bruit de fond, les propositions antérieures se sont orientées d'abord vers un accroissement du signal provenant des électrodes. L'accroissement de la capacité du système passe alors par une surface sensible accrue ce qui en pratique n'est pas souhaitable au-delà de dimensions relativement modestes. Pour éviter de trop grandes dimensions il a été aussi proposé de réaliser les électrodes à la manière de "peignes" dont les dents sont imbriquées les unes dans les autres. Ce type de réalisation ne permet pas cependant de s'affranchir des phénomènes parasites, les champs générés par les différentes parties des électrodes se superposant au-delà de deux "dents" voisines.

Une autre disposition visant à minimiser les parasites dus aux conducteurs, consiste à éloigner le plus possible les conducteurs les uns des autres de manière que le champ électrique qu'ils génèrent soit pratiquement insensible aux variations extérieures qui font l'objet de la détection. La difficulté vient de ce que pour des raisons pratiques, il est de beaucoup préférable de rassembler dans un même faisceau tous les conducteurs qui nécessairement doivent rejoindre le circuit d'analyse associé au capteur.

Le document US6094981 concerne un détecteur de pluie selon le préambule de la revendication 1. Les inventeurs se sont en conséquence efforcés de trouver un mode de réalisation dans lequel les inconvénients indiqués sont sinon totalement éliminés, au moins minimisés de telle sorte que les signaux du capteur ne soient pratiquement pas perturbés par les conducteurs d'une part, et que d'autre part ces conducteurs puissent être rassemblés dans une disposition commode.

Les inventeurs ont montré que les champs électriques générés par les conducteurs pouvaient être contrôlés de telle sorte qu'ils soient pratiquement insensibles aux phénomènes faisant l'objet de la détection - dans la suite de la description on parle de pluie par mesure de simplification - par une disposition convenable de ces conducteurs sur le vitrage portant le détecteur.

En pratique les inventeurs ont montré que les conducteurs situés sur la face non exposée directement à la pluie pouvaient engendrer un champ électrique efficace limité essentiellement à l'épaisseur du vitrage, de telle sorte que la présence de gouttes sur la face exposée proche des conducteurs n'entraîne pratiquement aucun signal détectable. Pour cela les inventeurs, contrairement à ce qui prévalait précédemment, ont disposé les conducteurs de manière aussi rapprochée que le permet la constitution de ces conducteurs. La distance entre les conducteurs est moindre que la distance qui les sépare des gouttes détectées. Cette distance est au moins égale à l'épaisseur de la feuille de verre extérieure. De préférence cette distance est au plus égale à la moitié de l'épaisseur de la feuille de verre, et de manière encore préférée inférieure au quart de cette épaisseur.

A l'expérience pour des épaisseurs de feuille de verre d'au moins 2mm, les conducteurs sont distants avantageusement au plus de 1mm et de préférence au plus de 0,5 mm. La distance la plus petite compte tenu des moyens de réalisation de ces couches conductrices et de la nécessité de garantir l'absence totale de risque de courts-circuits, est de préférence d'au moins 0,1mm.

Pour minimiser les capacités des conducteurs, est aussi prevu de réduire le plus possible les dimensions de ceux-ci, longueur et largeur.

Dans la mesure où il s'agit de préférence d'éléments constitués par un film de très faible épaisseur pour conserver le caractère essentiellement transparent, la réduction de la largeur se heurte rapidement à une difficulté venant de l'accroissement correspondant de la résistance. Les capacités des électrodes et leurs variations sont si faibles que la résistance des conducteurs doit être la plus faible possible. Pour ces raisons la largeur des conducteurs doit faire l'objet d'un compromis, suffisante pour ne pas avoir une résistance trop forte, mais limitée pour minimiser les capacités de ces conducteurs.

Par ailleurs les conducteurs en question restent avantageusement aussi courts que possible. Il est préférable que le circuit d'analyse des signaux soit à proximité des électrodes. Des conducteurs courts sont à la fois moins sensibles aux parasites et offrent une résistance plus petite, ces deux éléments jouant dans le sens de l'amélioration du signal analysé.

En fonction de la résistance par carré du matériau constituant les conducteurs, et de leur longueur, la largeur de ceux-ci peut varier sensiblement. Elle est de préférence au plus égale à 2mm ou mieux, inférieure à 1,5mm, et de façon particulièrement préférée au plus égale à 1mm.

En pratique les conducteurs formés de matériau sous forme de films ou de couches minces présentent avantageusement une résistance qui n'est pas supérieure à 10 Ω et, de préférence, pas supérieure à 5 Ω pour ceux comprenant des films conducteurs métalliques. La résistance des films constitués d'oxydes conducteurs ont avantageusement des résistance qui ne sont pas supérieures à 80 Ω et de préférence pas supérieure à 50 Ω. Pour les matériaux formant les films ou couches les plus conducteurs, la largeur de ceux-ci est avantageusement au plus égale à 2mm. De préférence la largeur des conducteurs est au plus de 1mm, et de façon particulièrement préférée au plus de 0,5mm.

Comme indiqué précédemment ces valeurs relatives aux dimensions des conducteurs sont fonction des vitrages sur lesquels les conducteurs sont appliqués. Plus les feuilles de verre sont épaisses, plus grande est la latitude dont on dispose pour les conducteurs. Inversement les capteurs sont d'autant plus sensibles que l'épaisseur du verre est plus petite. En pratique les feuilles de verre sur lesquelles les capteurs sont disposés ne dépassent pas 5mm d'épaisseur, et sont ordinairement de 4mm au plus. Les valeurs précédentes des dimensions de conducteurs correspondent à ces épaisseurs et plus particulièrement à des épaisseurs de l'ordre de 2 à 3mm.

Lorsque le film ou la couche de matériau conducteur composant les électrodes et les conducteurs s'étend au-delà de ceux-ci sur le vitrage, par exemple lorsque le vitrage est revêtu de manière à constituer un écran au rayonnement infrarouge, cette partie conductrice est aussi susceptible de développer de phénomènes capacitifs avec les éléments constituant le capteur et en particulier avec les conducteurs. Pour des raisons similaires à celles exposées précédemment, l'incidence de la présence de ce film ou de cette couche conducteurs à proximité du capteur doit donc être minimisée.

Comme pour les conducteurs eux-même, et pour des raisons analogues, selon l'invention il est avantageux de faire en sorte que la distance entre les conducteurs et le reste du film ou de la couche qui éventuellement les enveloppe (quelle que soit son étendue sur le vitrage), soit la plus petite possible. Cette distance des conducteurs au bord du film ou de la couche le plus proche est analogue à celle ménagée entre les conducteurs eux-mêmes. En d'autres termes la distance en question est avantageusement inférieure à 1mm, de préférence inférieure à 0,5mm et peut être aussi petite que 0,1mm.

Dans tous les cas la capacité propre des conducteurs reste très inférieure à celle des électrodes de mesure. Cette capacité n'est jamais supérieure à 5% de celle des électrodes et de préférence est inférieure à 3% de cette capacité.

L'invention est décrite de façon détaillée dans la suite en faisant référence aux figures annexées dans lesquelles:
- la figure 1 est une vue schématique en perspective d'un pare-brise équipé d'un capteur capacitif
- la figure 2 est une vue en plan du dessin des électrodes et des conducteurs qui les alimentent, formant un capteur capacitif, ne reproduisant pas les caractéristiques de l'invention;
- la figure 3 est une vue analogue à la figure 2 dans laquelle les conducteurs d'alimentation des électrodes suivent les dispositions proposées selon l'invention;
- les figures 4a et 4b représentent de façon schématique en coupe selon A-A des figures 2 et 3, le principe de fonctionnement des conducteurs dans les mises en oeuvre respectivement antérieures et selon l'invention;
- la figure 5 illustre un autre mode de mise en oeuvre selon l'invention;
- la figure 6 montre de façon schématique la disposition des conducteurs de la figure 5 dans la coupe selon B-B de la figure 5.

Par mesure de simplification dans la suite de la description les vitrages présentés sont dits constitués de feuilles de verre, lesquelles sont aussi le plus souvent de type feuilleté. Les capteurs selon l'invention sont aussi bien utilisables sur des vitrages constitués de "verres" organiques, tels que les poly-carbonates, bien connus et largement utilisés pour constituer des vitrages. De même si le plus fréquemment les capteurs en question sont introduits dans des ensembles feuilletés comportant deux feuilles rigides assemblées au moyen d'intercalaires du type polyvinyl butyral (PVB) ou analogue, il est possible de disposer le capteur sur un vitrage ne comportant qu'une feuille rigide. Il s'agit alors notamment de vitrages dits "bilayer" qui comportent une feuille de verre associée à une feuille de matériau plastique, notamment de polyuréthane, matériau qui offre simultanément la plasticité assurant la résistance contre l'éviction des passagers en cas d'accident, et une qualité de surface suffisante pour résister aux rayures. Il peut aussi s'agir de vitrage ne comprenant qu'une feuille de verre. Dans ce dernier cas cependant, il est préférable de faire en sorte que les éléments conducteurs du capteur soient isolés électriquement et protégés par un revêtement supplémentaire présentant avantageusement les mêmes propriétés de transparence.

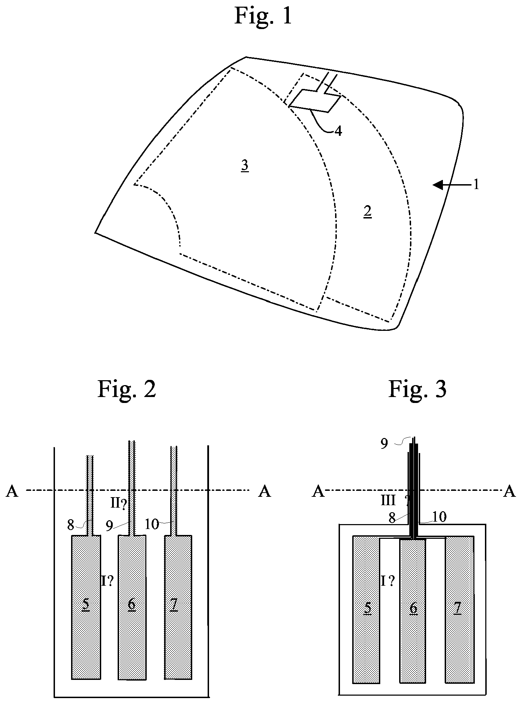

La figure 1 présente la disposition typique d'un capteur de pluie sur un pare-brise automobile (1).

Sur le pare brise le capteur de pluie (4) est nécessairement situé dans une zone (2, 3) balayée par les essuie-glace. Sur la figure ces zones sont schématisées par les traits discontinus. Comme indiqué précédemment cette disposition est commandée par le fait que le capteur (4) est destiné à déclencher le mouvement des essuie-glace en présence d'eau sur les zones balayées. En dehors de ces zones, l'eau peut demeurer après que l'apport de pluie sur les zones balayées a cessé. Si le capteur était disposé hors des zones balayées, le mouvement des essuie-glace pourrait être maintenu sans nécessité.

Le capteur (4) dans les systèmes de détection optique qui comportent des éléments non-transparents, est de préférence disposé en un point où il ne cause aucune gêne pour le conducteur. Si néanmoins il est encore dans le champ visuel, de préférence cet emplacement est déjà occulté par un autre élément fonctionnel. Très habituellement les capteurs optiques sont disposés derrière le rétroviseur intérieur.

Dans le cas des capteurs capacitifs selon l'invention, le fait que les électrodes soient de préférence très largement transparentes au rayonnement visible, offre une plus grande latitude dans le choix de cet emplacement, même si la surface occupée par le capteur est sensiblement plus importante que celle masquée par les capteurs optiques traditionnels.

Les capteurs capacitifs fonctionnent avec une unité d'analyse et de traitement des signaux. Le plus usuellement l'unité en question est constituée d'un circuit électronique relativement peu volumineux. Celui-ci peut même se réduire à une "puce" de quelques millimètres carrés ou moins. Cette unité est ordinairement non-transparente. Pour cette raison il est avantageux de la situer hors de la partie transparente du vitrage. Pour les raisons indiquées ci-dessous, l'unité d'analyse est cependant la plus voisine possible des électrodes du capteur. Elle est située par exemple derrière les bandes émaillées qui très souvent sont disposées en bordure des vitrages.

Les conducteurs reliant les électrodes au circuit d'analyse sont inévitablement le siège de signaux parasites sauf à les protéger par un "blindage". Cette protection n'est généralement pas souhaitable dans la mesure où elle s'établit au moyen de gaines conductrices qui ne sont pas transparentes. Pour faire en sorte que les conducteurs soient aussi peu visibles que possible ils sont donc de préférence non-gainés. Ils développent eux-mêmes une certaine capacité qui se superpose à celle des électrodes du capteur. Pour minimiser cet effet parasite, il est souhaitable de raccourcir le plus possible ces conducteurs. Pour cette raison les électrodes sont normalement à proximité d'un bord du vitrage.

Dans la forme présentée à la figure 1, le capteur (4) est en position haute centrale, c'est à dire derrière le rétroviseur. Compte tenu de son caractère essentiellement transparent, un autre positionnement est néanmoins possible.

Indépendamment de la faible longueur des conducteurs alimentant les électrodes, ceux-ci développent inévitablement des phénomènes capacitifs qui s'ajoutent à ceux des électrodes. Dans les propositions de l'art antérieur, pour minimiser ces phénomènes parasites, la tendance était de faire en sorte d'éloigner le plus possible ces conducteurs les uns des autres. La figure 2 représente schématiquement le dessin d'un capteur capacitif et de ses conducteurs dans une disposition de cette sorte.

Dans la forme représentée à la figure 2 le capteur comprend trois électrodes (5, 6, 7). Des électrodes de ce type sont formées par exemple de films conducteurs du type de ceux constituant les revêtements réfléchissant les rayons infrarouges utilisés pour minimiser "l'effet de serre" dans les véhicules. Ce sont des films comportant de le plus souvent une couche métallique, notamment d'argent, couche qui est englobée dans des couches diélectriques qui ont pour rôle à la fois de protéger la couche métallique, et de prévenir la réflexion des rayons de longueur d'onde du domaine du visible.

Lorsque le vitrage comporte une couche réfléchissant les infrarouges, il est avantageux de constituer les électrodes dans cette couche en procédant à l'élimination de la couche conductrice suivant le dessin choisi que la couche soit appliquée sur une feuille de verre rigide ou sur une feuille intercalaire souple. Cet enlèvement est effectué par exemple au moyen d'un laser. Les conducteurs sont alors avantageusement constitués de la même façon, directement dans la couche conductrice. La réalisation des électrodes et des conducteurs dans la même couche ou le même film est avantageuse dans la mesure notamment où elle évite les connexions qui introduisent le risque de défauts de contact, et sont difficilement aussi transparentes que les couches ou films conducteurs en question.

D'autres films réfléchissant les infrarouges sont constitués à partir d'oxydes conducteurs, par exemple à base d'ITO ("indium tin oxide"). Si leur constitution et leur dépôt différent des films métalliques, la formation des électrodes et conducteurs dans ces couches est analogue. On procède par exemple par enlèvement suivant le dessin choisi.

La formation du dessin du capteur peut aussi se faire par masquage des zones adéquates lors du dépôt de la couche.

D'autres techniques permettent encore de réaliser les électrodes et les conducteurs. Il s'agit en particulier de l'application d'une composition conductrice par sérigraphie, au pochoir, par impression par jet d'encre ou toute autre technique analogue, d'un motif reproduisant les éléments correspondant.

Dans le dessin présenté à la figure 2 les conducteurs (8, 9,10) reliant les électrodes à l'unité de traitement et de commande sont disposés à distance les uns des autres. La distance est d'un ordre de grandeur très supérieur à celle des électrodes entre elles. Cette disposition jointe aux dimensions limitées de la surface de ces conducteurs minimise le champ électrique qui se développe au niveau de ceux-ci. Néanmoins ces champs ne sont pas sans influence sur les mesures effectuées. Leur intensité moindre est combinée avec une large surface susceptible de modification de ces champs. Dans la mesure où le capteur est réglé pour être relativement sensible, les perturbations dues aux conducteurs ne sont pas négligeables.

Les capacités parasites des conducteurs sont d'autant moins négligeables que leur surface ne peut être choisie de manière arbitraire. Si leur longueur est, comme indiqué précédemment, aussi petite que possible, leur largeur est commandée par leur résistance surfacique. Des conducteurs très étroits sont préférables pour limiter leur capacité propre. Inversement des conducteurs très étroits entraînent une résistance élevée. La mise en oeuvre de ces systèmes capacitifs comporte par exemple la mesure du temps de charge des électrodes et la variation de ce temps en fonction de la variation de capacité, le tout effectué à une fréquence élevée de l'ordre de plusieurs dizaines kHz. Une résistance trop élevée réduit la vitesse de charge des électrodes et par suite leur sensibilité aux variations de capacité. Il est donc nécessaire de procéder à un compromis en matière de largeur des conducteurs.

Par ailleurs, pour la commodité du raccordement, il est nécessaire de disposer les conducteurs à proximité les uns des autres. Pour éviter les inconvénients liés à ce rapprochement des conducteurs, il est effectué dans une zone qui n'est plus soumise aux variations qui font l'objet de la détection, autrement dit à la présence des gouttes. Dans une construction l'extrémité des conducteurs est située par exemple sur la face du vitrage non exposée à la pluie. Cette disposition est particulièrement adaptée au cas où le capteur est formé sur un film inséré dans un vitrage. Dans ce cas le film est replié par exemple sur le bord du vitrage et la face non exposée. Sur la figure 2 on a représenté l'emplacement correspondant à ce pliage par le trait discontinu A-A.

Toutes les dispositions précédentes permettent d'améliorer la sensibilité des capteurs notamment en minimisant les parasites liés aux conducteurs, néanmoins des améliorations demeurent souhaitables. La réalisation d'un capteur du même type que celui-précédemment présenté, mais incluant les dispositions selon l'invention fait l'objet de la figure 3.

Sur le capteur de la figure 3 les électrodes et leur disposition sont identiques à celles de la figure 2. Diffèrent uniquement la disposition des conducteurs et leurs dimensions. Ceux-ci sont disposés aussi voisins les uns des autres que le permettent les techniques de production de ces motifs sur les couches ou films décrits ci-dessus. La distance entre les conducteurs doit être aussi suffisante pour prévenir les risques de défaut d'alignement conduisant à d'éventuels court-circuits. Dans la pratique la distance est avantageusement de l'ordre de 0,1 à 0,5 mm.

Par ailleurs pour les raisons indiquées précédemment les largeurs des conducteurs sont aussi relativement petites sans toutefois conduire à une résistance excessive. Compte tenu de la résistance des matériaux utilisés ordinairement, la largeur des conducteurs se situe de préférence entre 0,3 et 1mm, et plus habituellement entre 0,3 et 0,5 mm.

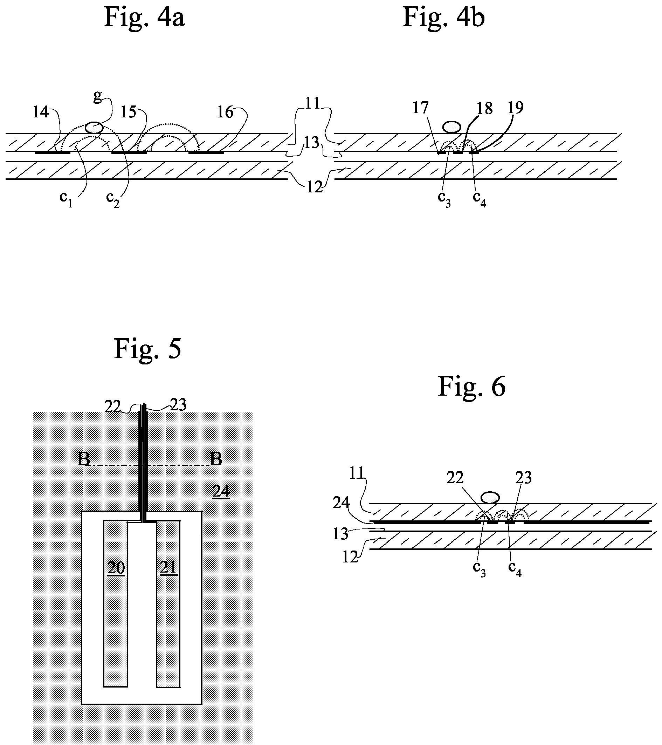

Le principe de fonctionnement des conducteurs est illustré de façon schématique aux figures 4a et 4b. Ces figures représentent de manière extrêmement simplifiée, et sans respecter les échelles de dimension pour en faciliter la compréhension, deux coupes selon A-A des conducteurs des figures 2 et 3.

Les capteurs représentés sont par exemple inclus dans des vitrages feuilletés composés de deux feuilles de verre (11) et (12) assemblées au moyen d'une feuille intercalaire 13. Dans les deux cas le capteur comprend trois conducteurs respectivement (14, 15, 16) et (17, 18, 19) reliés aux trois électrodes.

Les capteurs à trois électrodes sont utilisés par exemple pour des mesures effectuées de manière dite "différentielle". Des capteurs analogues, qui impliquent un traitement différent du signal, sont réalisés par exemple avec seulement deux électrodes.

Les conducteurs (14, 15, 16), sont relativement distants les uns des autres en proportion de l'épaisseur de la feuille de verre 11 exposées à la pluie. Comme indiqué, les proportions ne sont pas respectées. Les épaisseurs des feuilles entrant dans la composition des pare-brise sont habituellement de l'ordre de 1,5 à 3 mm. La distance entre les conducteurs dans les zones exposées est d'au moins 10 à 20 mm.

Les lignes de champ électrique dans ces conditions sont très diffuses dans un espace relativement important. Elles sont schématisées par des courbes pointillées. Leur "intensité" est peu différente entre celles qui restent entièrement localisées dans l'épaisseur des feuilles (représenté en c₁) et celles qui débordent de la feuille (11) (représenté en c₂) qui peuvent rencontrer une goutte g présente à la surface de la feuille 11. De plus les distances entre les conducteurs sont telles que la probabilité de trouver des gouttes dans ces emplacements est relativement importante. Le choix des conditions de fonctionnement permet dans une large mesure de minimiser les signaux parasites générés dans cette disposition. Il reste cependant un "bruit de fond" qui peut être d'autant plus gênant que les conditions choisies ne seront pas optimisées en tenant compte de tous les paramètres.

La disposition selon l'invention, représentée à la figure 4b offre une alternative qui permet de s'affranchir au moins en partie de ces contraintes. Dan ce cas les conducteurs (17, 18, 19) sont aussi proches les uns des autres que leur production le permet. Comme indiqué, un mode avantageux consiste à former ces conducteurs par ablation localisée à partir d'une couche conductrice uniforme. Le mode le plus précis dans ces conditions est l'ablation au moyen d'un laser. Dans ce mode de réalisation la distance entre les conducteurs peut être extrêmement réduite, quelques dixièmes de millimètres sont facilement réalisables avec une bonne précision.

Les largeurs des conducteurs sont avantageusement également petites. Elles restent suffisantes pour ne pas accroître de façon excessive la résistance des conducteurs.

Dans la disposition représentée de façon schématique, les lignes de champ (c₃, c₄) les plus intenses restent circonscrites à l'intérieur du vitrage. Le champ qui s'étend au-delà du vitrage est beaucoup moins intense. Les gouttes g, présentes sur le vitrage dans une telle disposition n'introduisent qu'une fiable variation de la capacité spécifique des conducteurs. De surcroît, lors que la mesure est conduite de manière différentielle ce qui est le cas représenté comportant trois électrodes et par conséquent trois conducteurs, la dimension des gouttes compte tenu de la proximité des conducteurs les uns des autres, entraîne simultanément une modification de la référence et de la mesure dans des conditions pratiquement identiques. L'altération de la mesure est alors pratiquement imperceptible.

Dans le mode présenté aux figures 4, les conducteurs comme les électrodes (non-représentées), sont disposés à l'interface de la feuille de verre (11) et de l'intercalaire (13). Cette disposition est avantageuse. Elle garantit au capteur la meilleure sensibilité tout en évitant le contact des gouttes d'eau. A l'inverse c'est aussi celle pour laquelle les perturbations liées à la capacité des conducteurs sont les plus sensibles. Il est donc particulièrement important de procéder selon l'invention, en rapprochant le plus possible les conducteurs les uns des autres. Une disposition différente est néanmoins également possible, particulièrement celle dans laquelle, les conducteurs sont situés à l'interface entre la feuille (12) et l'intercalaire (13).

Un dispositif d'essai permet de vérifier fonctionnement décrit ci-dessus. Dans ce dispositif une bille métallique conductrice fixée à l'extrémité d'un support non-conducteur simule une goutte d'eau. Cet élément est approché de l'échantillon de vitrage comportant les électrodes et les conducteurs d'alimentation. Le dispositif est alimenté à une fréquence de 30 kHz. La mesure est conduite de manière différentielle. La variation relative est déterminée pour un ensemble de positions de l'élément modificateur du champ vis-à-vis des électrodes et des conducteurs. On dresse ainsi la cartographie de la sensibilité du dispositif.

Dans les conditions de l'expérience les zones les plus sensibles entre les électrodes induisent une modification qui se traduit par un signal dont l'ampleur est comparée ultérieurement à celle occasionnée par la présence des conducteurs. Sur les figures 2 et 3, la position en question est marquée d'un point (I).

Dans la configuration des conducteurs de 1mm de largeur, espacés de 20mm la présence de l'élément simulant la goutte d'eau dans la zone située entre les conducteurs (point marqué II sur la figure 2) introduit une variation du signal dont le rapport à celui établi précédemment est de l'ordre de 1/3. Il est clair dans ces conditions que la perturbation engendrée par ce signal "parasite" est très significative. Le même essai conduit avec des conducteurs de 1mm de largeur, espacés de 0,3mm, dans la disposition selon l'invention représentée à la figure 3, pour une goutte simulée en position (III), ne conduit qu'à une variation du signal qui est dans un rapport d'intensité de moins d'un dixième de celle détectée précédemment, autrement dit qui n'est pas supérieure à 1/20 du signal délivré par les électrodes. La disposition selon l'invention permet de minimiser de façon très significative les signaux parasites engendrés par les conducteurs alimentant les électrodes.

La figure 5 présente un capteur analogue au précédent, comportant deux électrodes (20, 21) et deux conducteurs (22, 23). Le capteur en question est formé dans la couche (24) revêtant le vitrage. Il s'agit par exemple d'une couche conductrice de type métallique englobée dans un ensemble de couches diélectriques. Le dessin du capteur est obtenu par exemple par ablation de la couche dans les zones représentées "non-grisées". Comme précédemment les conducteurs (22, 23) sont disposés proches l'un de l'autre. Par ailleurs des capacités parasites pouvant aussi se développer entre les conducteurs et la couche (24) revêtant le vitrage, le bord de cette couche est également aussi voisin que possible des conducteurs de telle sorte que comme pour les conducteurs, les champs engendrés entre les conducteurs et la couche (24), ne génèrent pas de signaux parasites.

Dans ce qui précède les conducteurs sont présentés comme constitués du même matériau que celui des électrodes. Ce mode résulte de l'intérêt d'éviter les jonctions entre matériaux différents. On évite ainsi toute opération de collage ou soudure, susceptibles de mauvais contacts. Il est possible cependant de constituer les électrodes et les conducteurs de manière séparée sans pour autant sortir du cadre de l'invention.

## Revendications

1. Détecteur (4) capacitif de pluie apte à être disposé sur un vitrage automobile, comprenant plusieurs électrodes (5, 6, 7, 20, 21) et des conducteurs (8, 9, 10, 17, 18, 19, 22, 23) alimentant celles-ci, dans lequel le détecteur est apte à être disposé sur une face du vitrage non exposée à la pluie, la distance entre les conducteurs étant inférieure à celle séparant ces conducteurs de la face de la feuille exposée à la pluie, **caractérisé en ce que** les conducteurs sont de petites dimensions par rapport à celles des électrodes, et sont aussi proches que possible les uns des autres, pour que leur capacité propre n'induise pas de signal parasite significatif par rapport au signal des électrodes.

2. Détecteur (4) de pluie selon la revendication 1 dans lequel la distance entre les conducteurs est inférieure à la moitié de celle séparant ces conducteurs de la face de la feuille exposée à la pluie.

3. Détecteur (4) de pluie selon la revendication 1 dans lequel la distance entre les conducteurs est au plus égale au quart de celle séparant ces conducteurs de la face de la feuille exposée à la pluie.

4. Détecteur (4) de pluie selon l'une des revendications précédentes dans lequel la distance entre les conducteurs est au plus de 1mm et de préférence au plus de 0,5mm.

5. Détecteur (4) de pluie selon l'une des revendications précédentes dans lequel les conducteurs sont constitués dans un matériau essentiellement transparent au rayonnement visible aux épaisseurs utilisées.

6. Détecteur (4) de pluie selon la revendication 6 dans lequel les conducteurs présente une transmission lumineuse dans le visible qui n'est pas inférieure à 50% et de préférence pas inférieure à 60%.

7. Détecteur (4) de pluie selon l'une des revendications précédentes dans lequel les conducteurs sont constitués du même matériau que celui dont sont constituées les électrodes.

8. Détecteur (4) pluie selon l'une des revendications précédentes dans lequel les conducteurs présentent une résistance qui n'est pas supérieure à 10 Ω, et de préférence au plus égales à 5 Ω.

9. Détecteur (4) de pluie selon l'une des revendications précédentes dans lequel les conducteurs présentent une largeur qui n'est pas supérieure à 2mm et de préférence pas supérieure à 1,5mm.

10. Détecteur (4) de pluie selon l'une des revendications précédentes dans lequel le vitrage étant revêtu d'une couche conductrice sur la face de ce vitrage, le capteur étant constitué d'un motif formé dans cette couche, les conducteurs sont disposés le plus près possible de la limite de la couche non comprise dans le détecteur.

11. Détecteur (4) selon la revendication 10 dans lequel la distance entre le reste de la couche revêtant le vitrage et les conducteurs est de l'ordre de celle séparant les conducteurs entre eux.

12. Détecteur (4) selon l'une des revendications précédentes dans lequel la capacité propre des conducteurs est au plus égale à 5% de celle des électrodes et de préférence inférieure à 3%.

## Patentansprüche

1. Kapazitiver Regensensor (4), welcher geeignet ist, auf einer Automobilverglasung angeordnet zu werden, und mehrere Elektroden (5, 6, 7, 20, 21) und Leiter (8, 9, 10, 17, 18, 19, 22, 23), die diese speisen, umfasst, wobei der Sensor geeignet ist, auf einer Seite der Verglasung angeordnet zu werden, die nicht dem Regen ausgesetzt ist, wobei der Abstand zwischen den Leitern kleiner als derjenige ist, der diese Leiter von der dem Regen ausgesetzten Seite der Scheibe trennt,
**dadurch gekennzeichnet, dass** die Leiter kleine Abmessungen im Verhältnis zu denjenigen der Elektroden haben und einander so nahe wie möglich sind, damit ihre Eigenkapazität kein Störsignal hervorruft, das in Bezug auf das Signal der Elektroden signifikant ist.

2. Regensensor (4) nach Anspruch 1, wobei der Abstand zwischen den Leitern kleiner als die Hälfte desjenigen ist, der diese Leiter von der dem Regen ausgesetzten Seite der Scheibe trennt.

3. Regensensor (4) nach Anspruch 1, wobei der Abstand zwischen den Leitern höchstens gleich einem Viertel desjenigen ist, der diese Leiter von der dem Regen ausgesetzten Seite der Scheibe trennt.

4. Regensensor (4) nach einem der vorhergehenden Ansprüche, wobei der Abstand zwischen den Leitern höchstens 1 mm und vorzugsweise höchstens 0,5 mm beträgt.

5. Regensensor (4) nach einem der vorhergehenden Ansprüche, wobei die Leiter aus einem Material bestehen, das bei den verwendeten Dicken im Wesentlichen durchlässig für die sichtbare Strahlung ist.

6. Regensensor (4) nach Anspruch 6, wobei die Leiter eine Lichtdurchlässigkeit im sichtbaren Bereich aufweisen, welche nicht kleiner als 50 % und vorzugsweise nicht kleiner als 60 % ist.

7. Regensensor (4) nach einem der vorhergehenden Ansprüche, wobei die Leiter aus demselben Material bestehen, aus dem auch die Elektroden bestehen.

8. Regensensor (4) nach einem der vorhergehenden Ansprüche, wobei die Leiter einen Widerstand aufweisen, welcher nicht größer als 10 Ω und vorzugsweise höchstens gleich 5 Ω ist.

9. Regensensor (4) nach einem der vorhergehenden Ansprüche, wobei die Leiter eine Breite aufweisen, welche nicht größer als 2 mm und vorzugsweise nicht größer als 1,5 mm ist.

10. Regensensor (4) nach einem der vorhergehenden Ansprüche, wobei, wenn die Verglasung mit einer leitenden Schicht auf der Seite dieser Verglasung überzogen ist, wobei der Sensor aus einem in dieser Schicht ausgebildeten Muster besteht, die Leiter so nahe wie möglich an der Grenze der Schicht angeordnet sind, die nicht in dem Sensor enthalten ist.

11. Sensor (4) nach Anspruch 10, wobei der Abstand zwischen dem Rest der Schicht, welche die Verglasung überzieht, und den Leitern in der Größenordnung desjenigen liegt, der die Leiter voneinander trennt.

12. Sensor (4) nach einem der vorhergehenden Ansprüche, wobei die Eigenkapazität der Leiter höchstens gleich 5 % von derjenigen der Elektroden und vorzugsweise kleiner als 3 % ist.

## Claims

1. Capacitive rain detector (4) that is capable of being positioned on automobile glazing, comprising a plurality of electrodes (5, 6, 7, 20, 21) and conductors (8, 9, 10, 17, 18, 19, 22, 23) supplying power to the electrodes, wherein the detector is capable of being positioned on a face of the glazing that is not exposed to the rain, the distance between the conductors being shorter than that separating these conductors from the face of the sheet exposed to the rain, **characterized in that** the conductors are small in size with respect to the electrodes, and are as close as possible to one another, so that their specific capacitance does not induce any significant parasitic signal with respect to the signal from the electrodes.

2. Rain detector (4) according to Claim 1, wherein the distance between the conductors is less than half that separating these conductors from the face of the sheet exposed to the rain.

3. Rain detector (4) according to Claim 1, wherein the distance between the conductors is at most equal to a quarter of that separating these conductors from the face of the sheet exposed to the rain.

4. Rain detector (4) according to one of the preceding claims, wherein the distance between the conductors is at most 1 mm and preferably at most 0.5 mm.

5. Rain detector (4) according to one of the preceding claims, wherein the conductors are formed of a material that is essentially transparent to visible radiation at the thicknesses used.

6. Rain detector (4) according to Claim 6, wherein the light transmission of the conductors in the visible is not lower than 50% and preferably not lower than 60%.

7. Rain detector (4) according to one of the preceding claims, wherein the conductors are formed of the same material as that of which the electrodes are formed.

8. Rain detector (4) according to one of the preceding claims, wherein the resistance of the conductors is not higher than 10 Ω and preferably at most equal to 5 Ω.

9. Rain detector (4) according to one of the preceding claims, wherein the width of the conductors is not greater than 2 mm and preferably not greater than 1.5 mm.

10. Rain detector (4) according to one of the preceding claims, wherein, the glazing being coated with a conductive layer on the face ofthis glazing, the sensor being formed of a pattern formed in this layer, the conductors are positioned as close as possible to the limit of the layer not comprised in the detector.

11. Detector (4) according to Claim 10, wherein the distance between the remainder of the layer coating the glazing and the conductors is of the order of that separating the conductors from one another.

12. Detector (4) according to one of the preceding claims, wherein the specific capacitance of the conductors is at most equal to 5% of that of the electrodes and preferably lower than 3%.
